# EUROPEAN PATENT SPECIFICATION

(11) **EP 2 040 096 B1**
(45) Date of publication and mention of the grant of the patent: **14.09.2016**
(21) Application number: 08171146.7
(22) Date of filing: 25.05.2007
(51) Int. Cl.: G01V 3/08, A01D 75/18, A01F 29/16, B60Q 1/50

(54) **Foreign object detection system for agricultural harvesting machines**
Fremdobjekterkennungssystem für Erntemaschinen
Système de détection d'objets étrangers pour moissonneuses agricoles

(30) Priority: 30.05.2006 GB 0610530
(43) Date of publication of application: 25.03.2009
(62) Divisional of application: 07108973.4
(73) Proprietor: CNH Industrial Belgium nv, 8210 Zedelgem (BE)
(72) Inventor: Byttebier, Ward M. R., 8550, Zwevegem (BE); Paquet, Bert J.F., 8200, Sint-Andries (BE)
(74) Representative: CNH Industrial IP Department

(56) References cited:
- EP-A- 1 044 596
- DE-A1- 3 332 578
- DE-A1- 19 620 526
- FR-A1- 2 700 661
- US-A- 3 982 237
- US-A- 4 531 118
- US-A- 4 758 788
- US-A- 5 347 261
- US-A- 5 504 428

## Description

### Field of the invention

The present invention relates generally to agricultural harvesting machines comprising a foreign object detector in the feeder section for signalling the presence of a foreign metal object in the crop fed into the machine.

### Background of the invention

It is well known in the art to provide agricultural harvesting machines, such as forage harvesters, with an apparatus for detecting foreign material in the stream of crop material which is being fed to a crop processing unit, such as a rotating cutter head cooperating with a stationary shear bar. Such apparatus may comprise a metal detector sensor as described in US-A-4,433,528. The signal generated by this sensor is fed to feeder arrest means, which provoke an immediate stop of the means feeding the crop material to the cutter head. In this way, stray metal objects, which may be picked up from the field, are prevented from reaching the cutter head and causing serious damage to the knives and the shear bar. Portions of damaged knives might even become detached and cause worse damage to other sections of the crop processing unit or the rest of the harvester. Small metal parts would be comminuted by the knives and mixed with the crop. When ingested by cattle, they cause serious harm to the stomachs and intestines and even cause death of the animal. The use of a foreign object detector and quick arrest apparatus prevents such injuries.

Most metal detector sensors comprise a plurality of magnets providing magnetic flux lines extending into the crop feed path. Changes to the magnetic field are sensed by coils or Hall effect sensors which are arranged in the magnetic field, usually adjacent the magnets. The sensor may have an array of permanent magnets, some having a north pole and others a south pole extending towards the crop, as described in US-A-4, 433, 528 and US-A-5,343,676. Herein most flux lines flow from the one magnet to the other. In this manner the detection field is limited substantially to the area above the magnets. However, the sensitivity of the sensor decreases quickly with the vertical distance from the magnets, as the flux lines become less dense. As a result a small foreign object in the upper layer of the crop may pass undetected and reach the cutter head.

A higher detection field can be realised by using magnets that all have the same polarity, as in US-A-5,504,428 and DE-A-199 12 407. Such sensors are capable of detecting foreign objects in the top layers of the crop flow. However, it has been experienced that they also are less reliable because they frequently generate false detection signals in response to vibrations or movements of components of the harvester. For instance ferrous rollers or augers rotating in the vicinity of the sensor cause a substantial magnetic noise, which may include peak values exceeding the threshold value for triggering the quick stop apparatus. The operator may react to frequent false detections by raising the threshold value. As a result the sensor arrangement also becomes less sensitive to genuine signals caused by stray metal in the crop.

In co-pending GB Patent Application GB-A-2430036 there is described a detector apparatus that is sufficiently sensitive to the presence of foreign objects in the crop flow, but is relatively undisturbed by the surrounding components of the harvester.

An agricultural harvesting machine according to GB-A-2430036 comprises means for processing harvested crop material; feeder section for feeding harvested crop material to said processing means along a crop feed path; and foreign object detector means for signalling the presence of foreign objects in said harvested crop, said detector means comprising a sensor having a detection field transverse to said crop feed path and extending into at least a portion of said path. The sensor is substantially symmetric with respect to a direction transverse to said crop feed path; and the detector means further comprises restriction means distinct from the sensor, making the detection field asymmetric with respect to said transverse direction.

The sensor may be installed inside a hollow feeder roll, also termed a feed roll, of the feeder section. In case the sensor is installed in a roll below the crop feed path, the detection field as generated by the sensor and restricted by the restriction means preferably extends substantially above and forward of the feeder roll. In case the sensor is installed in a roll above the crop feed path, the detection field should rather extend substantially below and forward of this feeder roll.

Regardless of the manner in which the metal detector is constructed, once the feeder section has been arrested, it is necessary for the operator of the harvester to stop the vehicle, and then to search through the crop to locate and remove the detected foreign object. Having regard to the width of the feeder section, this does not always prove to be an easy task and it is of help to provide some indication to the person looking for the foreign object of its approximate location across the width of the feeder section.

To help in locating a foreign object, it is known to provide a plurality of metal detectors spread across the width of the feeder section so that the approximate location of the object can be determined by the comparing the individual responses of the individual metal detectors. However, though information may be available to the metal detection system as to the location of a foreign object, a suitable way is required of conveying this information to an operator standing outside the vehicle cab and searching for the detected foreign object.

### Summary of the invention

In accordance with the invention, there is provided a harvester having a feeder section divided across its width into a plurality of regions and a metal detection system comprising:
for each region of the feeder section, a metal detection circuit capable of generating an output signal indicative of the magnitude of the perturbation of a magnetic field caused by a metal foreign object;
means for comparing the output signals of the circuits with at least one threshold;
means for providing a visible indication when the or each threshold is exceeded; and
means for comparing the output signals of said circuits for resolving the position of the detected foreign object across the width of the feeder section of the harvester,
characterised in that the means for providing a visible indication comprise direction indicators of the harvester mounted externally from the harvester and are configured for emitting a visible pulsed signal, comprising flashing said direction indicators, of which signal the pulse sequence is encoded to indicate the position of the detected foreign object within the feeder section of the harvester.

The output signal may be indicative of the magnitude indicative of the perturbation of the magnetic field and the or each threshold may be set in dependence upon the speed of movement of the crop in the intake system of the harvester.

Because a metal detection system is sensitive to the rate of change of magnetic field, its response will vary not only with the size of the foreign object but also its rate of movement through the detection system. By varying the detection threshold with the speed of crop movement, the first aspect of the invention allows the speed of crop movement to be removed from the equation, enabling the detection system to provide a true indication of the size of the foreign object.

It is preferable to provide three thresholds and four size ranges.

The size of the foreign object can be indicated to the operator visually and/or aurally. For example, if a sound is emitted, its pitch may indicate the size of the foreign object while its pulse sequence may indicate the position of the object.

A representation on the vehicle dashboard, may comprise concentric circles, which may if desired differ in colour, against a chart indicating the position of the foreign object within the feeder section.

It would be further advantageous if the operator searching for the foreign object could be given some indication of its size.

### Brief description of the drawings

The invention will now be described further, by way of example, with reference to the accompanying drawings, in which:
Figure 1 is a schematic side elevation of a forage harvester, comprising a feed roll equipped with a sensor of a foreign object detector;
Figure 2 is a sectional view of the feed roll and the sensor of Figure 1;
Figure 3 is a cross sectional view of the feed roll and the sensor of Figure 2;
Figure 4 is a schematic representation of the detection field of the sensor of Figure 3 without the improvement of the present invention;
Figure 5 is a schematic representation of the detection field of the sensor of Figure 3 using the improvement of the present invention,
Figure 6 shows a possible form of pulse encoding.

### Detailed description of the preferred embodiment(s)

The terms "front" "rear" "forward", "rearward", "right" and "left" used throughout this specification are determined with respect to the normal direction of movement of the machine in operation. However they are not to be construed as limiting terms.

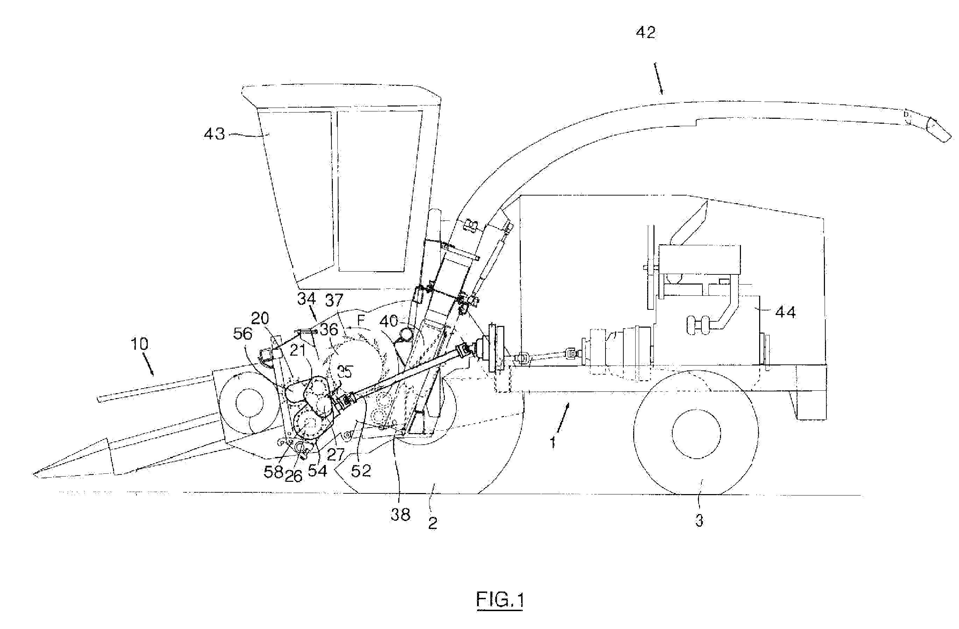

In Figure 1, there is shown a forage harvester having a main frame 1 on which there are mounted ground engaging traction wheels 2 and steering wheels 3. The forage harvester shown is equipped with a crop collecting apparatus, in the form of a row crop attachment 10, suitable for the harvesting of maize, but which can be replaced with a conventional windrow pick-up device or a conventional cutter bar attachment, depending on the type of crop to be harvested. The row crop attachment 10 harvests maize stalks from the field and delivers the crop material to the bite of feeder section installed in a front unit of the forage harvester.

The feeder section comprises a forward lower feed roll 26, a smooth rear lower feed roll 27, a forward upper feed roll 20 and a rear upper feed roll 21. The upper and lower parts of the feeder section rotate to convey the crop material along a crop feed path in between to a cutter head 36, which is mounted within a cutter head frame 34 and comprises a plurality of knives 37, generating a cylindrical peripheral shape or profile, when the cutter head 36 is rotated.

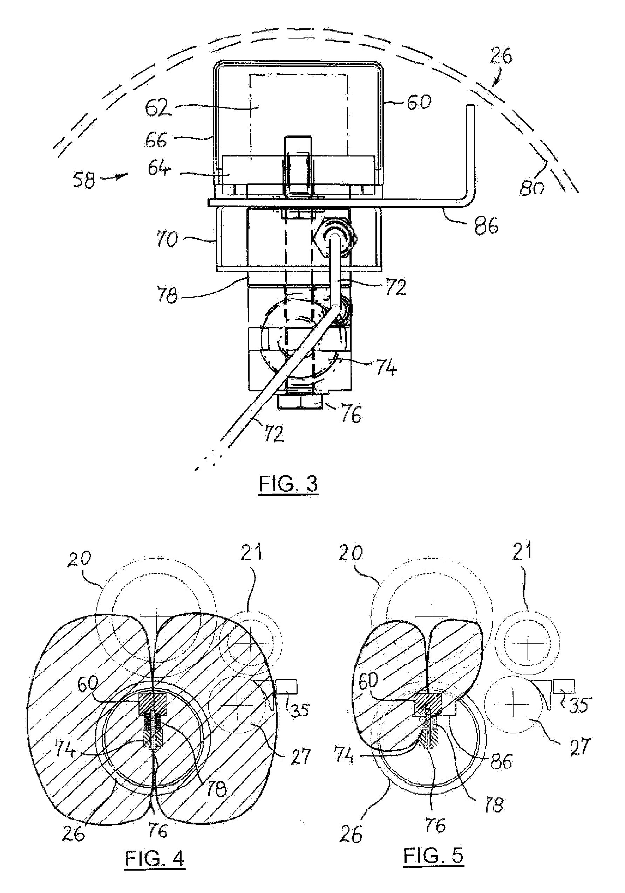

During normal harvesting operation, when the cutter head 36 is rotated in its normal operation sense, as indicated by arrow F in Figure 1, the knives 37 cooperate with a fixed shear bar 35 (see Figures 4 and 5) to cut the crop material to length and to project it into a blower housing 38 which is provided with a blower rotor 40. This rotor 40 comprises a plurality of paddles, which throw the material upwardly through a blower outlet into a discharge spout 42, which can be positioned by an operator in the cab 43 to direct the cut crop material as required, normally into a wagon which is moving alongside or behind the forage harvester.

The forage harvester has a power plant or engine 44, which is drivingly connected to a drive shaft 52, providing motive power to a lower feed roll transmission 54 on the left hand side of the front unit. This transmission 54 is connected directly to the lower feed rolls 26, 27 and through a drive shaft (not shown) to the upper feed roll transmission 56, drivingly interconnecting the upper feed rolls 21, 20.

The forage harvester is equipped with apparatus for detecting the presence of foreign objects in the crop material flowing to the rotating cutter head 36. The apparatus 58 in the illustrated embodiment comprises a sensor 60 installed within the forward lower feed roll 26 as shown in Figure 1. Alternatively, the sensor may be installed at any other convenient place along the path of the crop material to the cutter head 36. The detecting apparatus 58 illustrated is a metal detector, comprising a set of magnets 62 generating a magnetic field extending into the crop flow path and means (not shown) for sensing changes to this magnetic field, as caused by stray ferromagnetic objects in the crop flow. These sensing means may comprise coils around and/or between the magnets or Hall effect sensors above the magnets.

The arrival of a ferromagnetic object in the detection field causes a disturbance of the magnetic field which is captured by the sensing means of the sensor 60. The latter then generates a signal to a microprocessor of the detection apparatus to actuate a quick stop apparatus which is mounted to the drive line to the feed rolls 20, 21, 26, 27. Such quick stop apparatus may be of the type described in EP-A-0 821 871, but the invention may also be used with other quick stop apparatus, operable to arrest instantly the feeder section. In this manner, the apparatus halts the crop flow before the object can reach the shear bar 35 and the rotating cutter head 36. It thereby prevents serious damage to the knives 37 and the shear bar 35. It also prevents that the cutter head 36 chops the metal to small pieces which may be ingested by the cattle together with the forage.

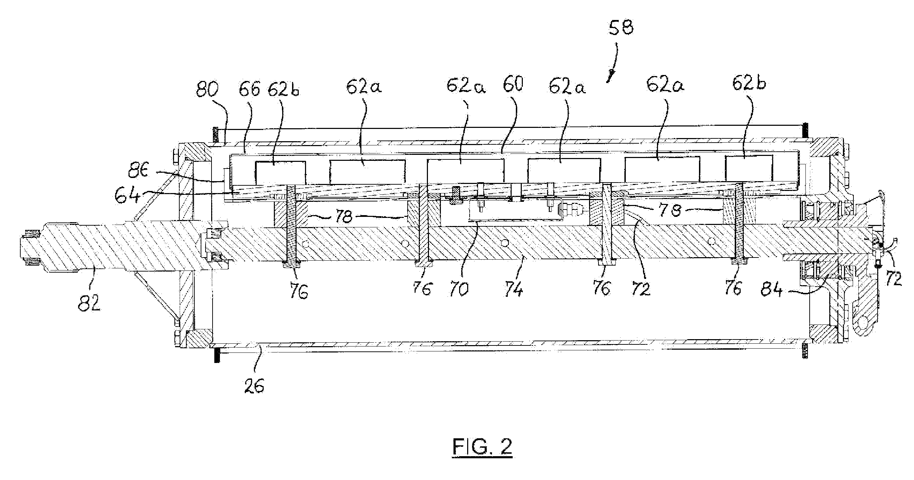

As shown in Figure 2, the sensor 60 comprises a base plate 64 made out of ferromagnetic steel, onto which is mounted a set of six magnets 62, all having a north pole at their upper ends. Alternatively, the upper ends may be south poles. The magnetic flux lines depart substantially perpendicularly from the upper ends of the magnets 62 and curve forwardly and rearwardly to the area below the sensor 60. The four central magnets 62a are wider than the two outer magnets 62b for a more even magnetic field above the sensor 60. The sensor 60 has a cover 66 made out of non-ferromagnetic material, such as stainless steel. Sensing coils (not shown) are arranged adjacent the magnets and are connected to electronic circuitry comprising an amplifier and a filter, in a box 70 below the base plate 64. The circuitry generates a signal which is transmitted through wiring 72 to a microprocessor in the cab 43 of the harvester. The empty space between the cover 66 and the magnets 62 and coils may be filled with an appropriate passive filling material, such as polyurethane for improving the durability of the sensor 60 under the vibrations of operating harvester.

Because of the alignment of the magnets 62 on the base plate 64, their distribution over the full sensor 60 is substantially symmetric with respect to its longitudinal direction, i.e., the direction transverse to the crop flow. When removed from the harvester and in the absence of ferromagnetic materials, the sensor 60 produces a substantially symmetric magnetic field, extending as far forwardly as rearwardly. A cross section of the resulting field is schematically shown in Figure 4.

The sensor 60 is mounted by four bolts 76 to a stationary shaft portion 74, which extends over almost the full width of the feed roll 26. Four bushings or spacers 78 hold the sensor 60 at a small distance from the cylindrical wall 80 of the feed roll. This wall is made out of non-ferromagnetic material, such as austenitic stainless steel. At one side, the wall 80 is drivingly connected to a rotatable shaft portion 82 of the feed roll. On the other side, the wall is mounted via a ball or roller bearing 84 to the stationary shaft portion 74.

As best shown in Figure 3, a rearwardly extending plate 86 is mounted underneath the sensor 60 to the stationary shaft portion 74. It has an upwardly angled rear section which ends short of the inner surface of the feed roll wall 80. The plate 86 has a width that is slightly greater than the width of the sensor base plate 64. It is made out of ferromagnetic material, such that it captures the rearward flux lines from the magnets 62 and thereby contains the rearward portion of the magnetic field, as schematically shown in Figure 5. The plate 86 may have a thickness of 3 to 5 mm.

Commonly, also the stationary shaft portion 74 is made out of ferromagnetic material. When the sensor 60 is mounted thereto by ferromagnetic bolts 76 and/or spacers 78, this shaft portion equally becomes magnetised, thereby extending the magnetic detection field downwards as schematically shown in Figure 4. This effect may be advantageous when no metal machine components are moving through the detection field. However, the front field area may extend as far as the path of a rotating component, e.g. an auger, of the harvesting attachment 10, and the rear area may extend into the path of the knives of the cutter head knives 37. These machine components will then cause a recurring noise in the detection apparatus signal.

The addition of the ferromagnetic plate 86 to the detection apparatus 58 already substantially reduces the rear and lower portion of the detection field, such that it keeps clear of the knife path. The front and rear portion of the detection field can be reduced by magnetically insulating the sensor 60 from the shaft portion 74. This may be realised by the use of bolts 76 and spacers 78 of non-ferromagnetic material. For instance, the bolts may be made of austenitic stainless steel and the spacers may be made out of aluminium. The resulting magnetic detection field then generally takes the form shown in Figure 5. The field still advantageously encompasses the portion of the crop flow path in front of and above the feed roll 26, but has been reduced substantially in the other areas. In this manner, the susceptibility of the sensor 60 to noise from moving components of the feeder section and the harvesting attachment 10 is reduced dramatically.

The resulting signal from the sensor 60 contains a substantially smaller amount of noise. This is particularly advantageous, where the detection apparatus 58 comprises means, e.g. software, that automatically adapt the threshold level at which the quick stop apparatus is triggered, to the average level of the noise signal. Such system is described in EP-A-0.735.384. In the present arrangement, the use of the plate 86 reduces the noise signals, and the genuine signals caused by stray metal become more distinguishable, such that the overall performance of the detection apparatus is increased.

The description above and the drawings relate to a metal detection system that is the same as that described in GB-A-2430036. Such an arrangement retains the effectiveness of the sensor in the area above the magnets 60, while reducing or eliminating the influence of machine components in the area behind and below the feed roll 26. It should however be understood that the present invention is not restricted to such a metal detection system but to the manner in which information gathered from a metal detection system can be conveyed to the vehicle operator.

Figure 2 only shows a single circuit 70 but in the invention the feeder section is divided across its width into a plurality of regions each with its own metal detection circuit and the outputs of the different circuits are compared to determine where in the feeder section a foreign object has been detected. If for example there are four separate magnetic circuits and metal detectors, the width of the feeder section can be divided into four and a response from any one only of the detectors will indicate if the object detected falls in the first, second, third or fourth region of the feeder section. The magnetic circuits will in practice overlap, if only to a limited extent, to avoid any dead band between them, whereupon an equal response from, say, the first two metal detectors would indicate the presence of an object approximately one quarter of the way along the width of the feeder section.

It is readily possible to display the position of the detected object on a display panel visible in the cab of the vehicle but such a display is not particularly convenient to a person searching in the crop present in the feeder section. The invention therefore proposes emitting a signal that is visible by a person outside the cab of the vehicle, the signal being pulse encoded in order to indicate the position of the foreign object within the feeder section.

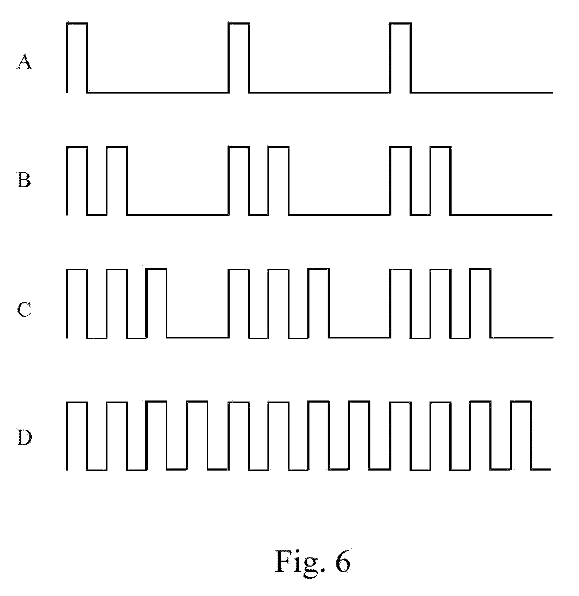

Figure 6A to 6D of the accompanying drawing show examples of four different pulse sequences that may be used to indicate the position of the foreign object. The pulses in this case are emitted in groups and the number of pulses within each group is indicative of the quarter within which the foreign object is detected. Hence, the pulse sequence of Figure 6A may be represented by 1000_1000_1000... to signify that the object is in the first quarter. The pulse sequence of Figures 6B, 6C and 6D, which can be represented respectively by 1100_1100_1100..., 1110_1110_1110..., and 1111_1111_1111... signify that the object is in the second, third and fourth quarter, commencing the counting from a given end of the feeder section. Each pulse in the sequence is emitted by flashing a light of the direction indicators.

The pulse sequences shown in Figure 6 are, of course, only an example and one can envisage numerous alternative ways of conveying the same information to the vehicle operator. For example, if the feeder section is divided into only three regions, then flashing only one of the indicators could be used to signify that an object is near that end of the feeder section while flashing both indicators at the same time could indicate that the object is in the middle region of the feeder section.

It is also of assistance to the vehicle operator to have some indication of the size of the object that is to be located. Hitherto, the magnitude of the signal generated by a metal detector could not be relied upon as a reliable indication of the size of an object as the signal would vary both with the size of the foreign object and its speed of movement through the feeder section.

In another aspect of the present invention, the magnitude of the detected signal is compensated for the speed of movement by setting the detection thresholds at speed dependent levels. This provides an indication of the true size of the foreign object and this information is also conveyed to the vehicle operator.

In order to display the information on a display panel within the camp of the harvester, it is possible to use an image of the feeder section divided into the appropriate number of regions corresponding to the number of separate metal detectors and to light up within a region within which a foreign object has been detected a set of preferably four concentric circles representing the estimated size of the foreign object. Illumination of the innermost circle alone would indicate a small object while illumination of all the circles would indicate a large object. The concentric circles may if desired be of different colour to assist in distinguishing the different size thresholds than they represent from one another.

As flashing lights are used to indicate the position of a foreign object in a manner proposed in Figure 6, then the group repetition frequency may be varied to provide an indication of the size of the foreign object.

## Claims

1. A harvester having a feeder section (20, 21, 26, 27) divided across its width into a plurality of regions and a metal detection system (58) comprising:
for each region of the feeder section, a metal detection circuit (70) capable of generating an output signal indicative of the magnitude of the perturbation of a magnetic field caused by a metal foreign object;
means for comparing the output signals of the circuits with at least one threshold;
means for providing a visible indication when the or each threshold is exceeded; and
means for comparing the output signals of said circuits for resolving the position of the detected foreign object across the width of the feeder section (20, 21, 26, 27) of the harvester,
**characterised in that** the means for providing a visible indication comprise direction indicators of the harvester mounted externally from the harvester and are configured for emitting a visible pulsed signal, comprising flashing said direction indicators, of which signal the pulse sequence is encoded to indicate the position of the detected foreign object within the feeder section (20, 21, 26, 27) of the harvester.

2. A harvester as claimed in claim 1, wherein the pulsed signal comprises pulse sequences emitted in groups, the number of pulses within each group being indicative of the position of the detected foreign object.

3. A harvester as claimed in any preceding claim, wherein the or each threshold is set in dependence upon the speed of movement of the crop in the intake system (34) of the harvester.

4. A harvester as claimed in any preceding claim, wherein a plurality of thresholds is set to divide detected foreign objects in at least two size ranges.

5. A harvester as claimed in claim 4, wherein the detected foreign objects are divided in four size ranges.

6. A harvester as claimed in any of the claims 4 or 5, having a screen located within a cab (43) of the harvester on which a representation of a detected foreign object is graphically displayed.

7. A harvester as claimed in claim 6, wherein a detected object is displayed on the screen by illuminating one or more of a set of concentric circles against a chart indicating the position of the foreign object within the feeder section (20, 21, 26, 27).

8. A harvester as claimed in any of the claims 4 to 7, further comprising means for visually indicating the estimated size of the detected foreign object to an operator located outside a cab (43) of the vehicle.

9. A harvester as claimed in claim 8, when dependent on claim 2, wherein the means for indicating the estimated size comprise means for varying the group repetition frequency of the flashing indicators.

## Patentansprüche

1. Eine Erntemaschine mit einem Zuführungsabschnitt (20, 21, 26, 27), der über seine Breite in eine Mehrzahl von Bereichen unterteilt ist, und mit einem Metalldetektorsystem (58), das Folgendes umfasst:
für jeden Bereich des Zuführungsabschnittes, eine Metalldetektorschaltung (70), die in der Lage ist, ein Ausgangssignal zu erzeugen, das die Größe der Störung eines Magnetfeldes anzeigt, die durch einen metallischen Fremdkörper hervorgerufen wird;
Einrichtungen zum Vergleich der Ausgangssignale der Schaltungen mit zumindest einem Schwellenwert;
Einrichtungen zur Lieferung einer optischen Anzeige, wenn die oder jeder Schwellenwert überschritten ist; und
Einrichtungen zum Vergleich der Ausgangssignale der Schaltungen zur Auflösung der Position der detektierten Fremdkörper über die Breite des Zuführungsabschnittes (20, 21, 26, 27) der Erntemaschine,
**dadurch gekennzeichnet, dass** die Einrichtungen zur Lieferung einer optischen Anzeige Richtungsanzeiger der Erntemaschine umfassen, die auf der Außenseite der Erntemaschine angeordnet sind und zur Aussendung eines sichtbaren Impulssignals konfiguriert sind, das ein Blinken der Richtungsanzeiger umfasst, wobei von diesem Signal die Impulssequenz kodiert ist, um die Position des detektierten Fremdkörpers innerhalb des Zuführungsabschnittes (20, 21, 26, 27) der Erntemaschine anzuzeigen.

2. Eine Erntemaschine nach Anspruch 1, bei der das Impulssignal Impulsfolgen umfasst, die in Gruppen ausgesandt werden, wobei die Anzahl der Impulse innerhalb jeder Gruppe die Position des detektierten Fremdkörpers anzeigt.

3. Eine Erntemaschine nach einem der vorhergehenden Ansprüche, bei der der oder jeder Schwellenwert in Abhängigkeit von der Bewegungsgeschwindigkeit des Erntematerials in dem Aufnahmesystem (34) für die Erntemaschine eingestellt ist.

4. Eine Erntemaschine nach irgendeinem der vorhergehenden Ansprüche, bei der eine Mehrzahl von Schwellenwerten eingestellt ist, um detektierte Fremdkörper in zumindest zwei Größenbereiche zu unterteilen.

5. Eine Erntemaschine nach Anspruch 4, bei der die detektierten Fremdkörper in vier Größenbereiche unterteilt sind.

6. Eine Erntemaschine nach einem der Ansprüche 4 oder 5, die einen in einer Kabine (43) der Erntemaschine angeordneten Bildschirm aufweist, auf dem eine Darstellung eines detektierten Fremdkörpers grafisch angezeigt ist.

7. Eine Erntemaschine nach Anspruch 6, bei der ein detektiertes Objekt auf dem Bildschirm durch Beleuchten von einem oder mehreren eines Satzes von konzentrischen Kreisen gegenüber einem Diagramm dargestellt ist, das die Position des Fremdkörpers in dem Zuführungsabschnitt (20, 21, 26, 27) anzeigt.

8. Eine Erntemaschine nach irgendeinem der Ansprüche 4 bis 7, die weiterhin Einrichtungen zur optischen Anzeige der geschätzten Größe des detektierten Fremdkörpers an eine Bedienungsperson umfasst, die sich außerhalb einer Kabine (43) des Fahrzeuges befindet.

9. Eine Erntemaschine nach Anspruch 8 unter Rückbeziehung auf Anspruch 2, bei der die Einrichtungen zur Anzeige der geschätzten Größe Einrichtungen zum Ändern der Gruppen-Wiederholfrequenz der blinkenden Anzeigeeinrichtungen umfassen.

## Revendications

1. Machine de récolte comportant une section d'alimentation (20, 21, 26, 27) divisée dans sa largeur en une pluralité de zones et un système de détection de métal (58) comprenant :
pour chaque zone de la section d'alimentation, un circuit de détection de métal (70) capable de produire un signal de sortie indiquant l'intensité de la perturbation d'un champ magnétique provoquée par un objet métallique étranger,
un dispositif pour comparer les signaux de sortie des circuits avec au moins une valeur seuil,
des moyens pour fournir une indication visible lorsque la ou chaque valeur seuil est dépassée, et
des moyens pour comparer les signaux de sortie des dits circuits afin de résoudre la position de l'objet étranger détecté sur la largeur de la section d'alimentation (20, 21, 26, 27) de la machine de récolte,
**caractérisée en ce que** les moyens pour fournir une indication visible comprennent des voyants d'orientation de la machine de récolte montés à l'extérieur de la machine de récolte et sont conçus pour émettre un signal pulsé visible, comprenant le clignotement des dits voyants d'orientation, et la séquence d'impulsions du dit signal est codée pour indiquer la position de l'objet étranger détecté dans la section d'alimentation (20, 21, 26, 27) de la machine de récolte.

2. Machine de récolte selon la revendication 1, **caractérisée en ce que** le signal pulsé comprend des séquences d'impulsions émises en groupes, le nombre d'impulsions à l'intérieur de chaque groupe indiquant la position de l'objet étranger détecté.

3. Machine de récolte selon l'une quelconque des revendications précédentes, **caractérisée en ce que** la ou chaque valeur seuil est réglée en fonction de la vitesse du déplacement du produit récolté dans le système d'admission (34) de la machine de récolte.

4. Machine de récolte selon l'une quelconque des revendications précédentes, **caractérisée en ce qu'**une pluralité de valeurs seuil est fixée pour diviser les objets étrangers détectés en au moins deux gammes de calibre.

5. Machine de récolte selon la revendication 4, **caractérisée en ce que** les objets étrangers détectés sont divisés en quatre gammes de calibre.

6. Machine de récolte selon l'une quelconque des revendications 4 ou 5, comportant un écran situé à l'intérieur de la cabine (43) de la machine de récolte sur lequel une représentation d'un objet étranger détecté est affichée graphiquement.

7. Machine de récolte selon la revendication 6, **caractérisée en ce qu'**un objet détecté est affiché sur l'écran en éclairant un ou plusieurs d'une série de cercles concentriques sur un diagramme indiquant la position de l'objet étranger dans la section d'alimentation (20, 21, 26, 27).

8. Machine de récolte selon l'une quelconque des revendications 4 to 7, comportant en plus des moyens pour indiquer visuellement le calibre estimé de l'objet étranger détecté à un conducteur se trouvant à l'extérieur de la cabine (43) du véhicule.

9. Machine de récolte selon la revendication 8, lorsqu'elle se rapporte à la revendication 2, **caractérisée en ce que** les moyens pour indiquer le calibre estimé comprennent des moyens pour faire varier la fréquence de répétition du groupe des voyants clignotants.
